# EUROPEAN PATENT SPECIFICATION

(11) **EP 1 432 236 B1**
(45) Date of publication and mention of the grant of the patent: **09.11.2005**
(21) Application number: 03078565.3
(22) Date of filing: 17.11.2003
(51) Int. Cl.: H04N 1/56

(54) **Image processing of pixelised images**
Bildverarbeitungsverfahren von gerastertern Bildern
Procédé de traitement d'image pixelisée

(30) Priority: 27.11.2002 EP 02079957
(43) Date of publication of application: 23.06.2004
(73) Proprietor: Océ-Technologies B.V., 5914 CC Venlo (NL)
(72) Inventor: Boesten, Hubertus M. J. M., 6074 ES Melick (NL); Van der Sanden, Peter M., 5991 GC Baarlo (NL)

(56) References cited:
- EP-A- 0 724 229
- EP-A- 0 967 791
- EP-A- 1 148 711
- US-A1- 2002 019 861

## Description

### FIELD OF THE INVENTION

The present invention is related to the image processing of pixelised images, more particularly to the judgement whether a pixelised image is a monochrome or a colour image. The image processing system may be a stand-alone system or may be part of a scanning and/or image recording and/or printing and/or copying system.

### BACKGROUND OF THE INVENTION

A pixelised image is a digital image or document composed of pixels (picture elements). There are numerous ways to generate a pixelised image such as for instance, by scanning an original using a scanner, or by generating still images using a digital camera or a video camera. Besides pixelised images generated by a scanner or a digital camera, which are usually in a bitmap format or a compressed bitmap format, also artificially created, e.g. by a computer program, digital images or documents may be offered to the image processing system. The latter images are usually in a structured format including but not limited to a page description language (PDL) format and an extensible markup language (XML) format. Examples of a PDL format are PDF (Adobe), PostScript (Adobe), and PCL (Hewlett-Packard). These structured images can easily be converted by a raster image processor into pixelised images. The pixelised images may comprise colour data including colour image data, colour errors, e.g. introduced by scanning a black and white original with a colour scanner, or colour background data, e.g. when scanning an original printed on a coloured background with a colour scanner. For each pixelised image, or parts thereof, the image processing system has to judge whether it is a monochrome image or a colour image. The reliability and quality of this judgement is important for many reasons related to the subsequent processing of the image. One of these reasons is for instance image processing time and memory allocation, particularly when storing the pixelised image. When a monochrome image is misjudged as a colour image, the processing time and storage capacity required be considerably larger compared to storing the image when being judged as a monochrome image. Another reason can be image quality when reproducing the image. For example when a monochrome original is scanned by a colour scanner, recognition of the pixelised image as a colour image and subsequent reproduction thereof by a colour image forming system could result in a severe image quality degradation due to e.g. registering errors. Systems used to reproduce pixelised images include display systems, scanning systems and printing and/or copying systems. A further reason can be throughput and cost as image reproduction on a monochrome image reproduction system is usually cheaper and faster compared to reproduction on a colour reproduction system. Particularly in a professional environment such as e.g. the repro department of a company or a print and/or copy shop, where multiple image reproduction systems are available, including a colour image reproduction system and a black and white image reproduction system and/or a colour image reproduction system capable of operating in a "black only" mode, it is desirable to make optimal use of the resources in order to optimise throughput and costs. Also for the reproduction of a mixed colour image, being an image or a document comprising both coloured and non-coloured parts, it may be beneficial to split the mixed colour image into a colour part and a monochrome part.

Image processing systems are known, as for instance disclosed in EP363146, which are able to split mixed colour images on page level into a colour part and a monochrome part. The colour part contains all the pages of the mixed colour image with colour information. The monochrome part contains all the pages of the mixed colour image with black and white information only. Subsequently, the respective parts are processed by a colour image reproduction system and a black and white image reproduction system respectively. The sole criterion to judge whether a page is to be classified as a colour page or not is the bare presence of some colour information.

More advanced algorithms could be used to provide the operator and/or user with the possibility to define a threshold in the colour content, i.e. the amount of colour information present on a image page, or image part or image. If the amount of colour is below the colour threshold, the image is subsequently treated as monochrome image, even although it may contain a limited amount of colour information, e.g. a coloured line or bullet.

The system disclosed in EP 0 448 330 firstly converts the image data of the pixelised image to a CIE colour space. EP 0 448 330 contains embodiments wherein the saturation value of each individual pixel is compared to a first threshold in order to judge whether it is a colour pixel or not. The colour pixels are counted and compared with a second threshold in order to judge whether the image is a colour image or not. Although this solution may definitely have some merit, a disadvantage thereof is that the colour judgement is performed on individual pixels and is inherently sensitive to colour errors, e.g. pixels having a saturation value different from the original due to a scan read and /or calibration error. EP 0 448 330 further discloses to perform the colour judgement in accordance with a frequency distribution of saturation information of each pixel. In particular, pixels having a saturation value with a high occurrence in the image are decisive in the colour judgement. A disadvantage of the disclosed method is its lack of sensitivity when judging images having a limited amount of colour, in other words images comprising only colour pixels having a saturation value with a low occurrence in the image.

### OBJECTS OF THE INVENTION

It is an object of the invention to provide an image processing system capable of judging whether a pixelised image or a part thereof is a monochrome or a colour image. To increase the reliability of the judgement, instead of making the judgement on the level of an individual pixel, the judgement should be performed for substantially all the pixels of the image or image part at the same time.
It is another object of the invention to provide an image processing system capable of performing the monochrome/colour judgement for a pixelised image with a high sensitivity, such that colour pixels having a saturation value with a low occurrence are properly taken into account. Preferably the judgement is performed in an automated way.
It is a further object of the invention to provide an image processing system capable of performing the monochrome/colour judgement for a pixelised image independent of the colour space whereto the image data of the pixelised image are referring.

### SUMMARY OF THE INVENTION

In an aspect of the invention, an image processing method for processing a pixelised image is disclosed, the method comprising the steps of:
analysing the pixel data representative for said pixelised image in a colour space and based thereon determining the grey axis;
determining for each pixel of said pixelised image the shortest distance to said grey axis;
forming a cumulative histogram by plotting for the pixels of said pixelised image the value of said shortest distance versus the cumulative pixel count, being the number of associated pixels having at least said value of said shortest distance; and
analysing the relationship between the pixels in said cumulative histogram and based thereon judging whether said pixelised image is to be processed as a monochrome image or a colour image. The grey axis is defined as the straight line connecting the white point with the black point. The co-ordinates of the black point and the white point depend on the colour space whereto the pixel data refer. The black point may be the ideal black point and the white point may be the ideal white point. Alternately, the cluster of the darkest pixels, being those pixels of the pixelised image with lack of lightness and lowest chromaticity, may be taken into account to determine the black point, e.g. by defining the black point as the pixel with the average value of luminance of said cluster of darkest pixels, while the lightest pixels may be taken into account to determine the white point. One could also opt to define the black point as that pixel of the pixelised image which is located closest to the ideal black point, while defining the white point as that pixel of the pixelised image which is located closest to the ideal white point. Other known methods may be equally applied to determine the black point and/or the white point.

In an embodiment of the invention, when analysing the relationship between the pixels in the cumulative histogram, only the pixels of the cumulative histogram having an associated cumulative pixel count value equal to or greater than a predetermined threshold are taken into account. Doing so allows to decide to take small colour objects into account or not in the monochrome/colour judgement by selecting an appropriate threshold.

In another embodiment of the invention, the relationship between the pixels in the cumulative histogram is determined in an automated way by applying a linear regression analysis to said pixels in said cumulative histogram. When analysing whether the pixelised image is to be processed as a monochrome image or a colour image, the judgement is based on comparing the value of at least one regression parameter with a predetermined threshold value of said at least one regression parameter. The regression parameters are selected from a group of parameters comprising the correlation coefficient (R), the coefficient of determination (R²), the slope of the regression line and the intercept of the regression line.

In another aspect of the invention, an image processing system for processing a pixelised image is disclosed, the system comprising:
a pre-processor for analysing the pixel data representative for said pixelised image in a colour space and based thereon determining the grey axis, being defined as the straight line connecting the white point with the black point, and determining for each pixel of said pixelised image the shortest distance to said grey axis;
an analyser for analysing the relationship between the pixels in a cumulative histogram, said cumulative histogram being formed by plotting for the pixels of said pixelised image the value of said shortest distance versus the cumulative pixel count, being the number of associated pixels having at least said value of said shortest distance, and
judging means for judging, based on said relationship between the pixels in said cumulative histogram, whether said pixelised image is to be processed as a monochrome image or a colour image. The system may further comprise a converter converting said pixel data representative for said pixelised image in said colour space to pixel data representative for said pixelised image in a CIE colour space.

### BRIEF DESCRIPTION OF THE DRAWINGS

Figure 1 depicts a schematic representation of an image processing system for processing pixelised images according to an embodiment of the invention.
Figure 2 depicts a flowchart for operating an image processing system as e.g. depicted in fig.1 such as to judge whether a pixelised image is to be further processed as a monochrome or a colour image.
Figure 3a is a monochrome photograph.
Figure 3b is a representation of the pixelised photograph of fig.3a in the CIE L*a*b* colour space.
Figure 3c is a cumulative histogram of the pixelised photograph of fig.3a according to an embodiment of the invention.
Figure 4a is a monochrome representation of a black and white text document on a yellowed paper background.
Figure 4b is a representation of the pixelised text document of fig.4a in the CIE L*a*b* colour space.
Figure 4c is a reproduction of the black and white text document of fig.4a after background correction by translating and rotating the grey axis of the pixelised image.
Figure 5a is a monochrome representation of a monochrome document including some small colour objects.
Figure 5b is a representation of the pixelised document of fig.5a in the CIE L*a*b* colour space.
Figure 5c is a cumulative histogram of the pixelised document of fig.5a according to an embodiment of the invention.
Figure 6a is a monochrome representation of a full colour picture.
Figure 6b is a representation of the pixelised picture of fig.6a in the CIE L*a*b* colour space.
Figure 6c is a cumulative histogram of the pixelised picture of fig.6a according to an embodiment of the invention.

### DETAILED DESCRIPTION OF THE INVENTION

In relation to the appended drawings, the present invention is described in detail in the sequel. Several embodiments are disclosed. It is apparent however that a person skilled in the art can imagine several other equivalent embodiments or other ways of executing the present invention, the scope of the present invention being limited only by the terms of the appended claims.

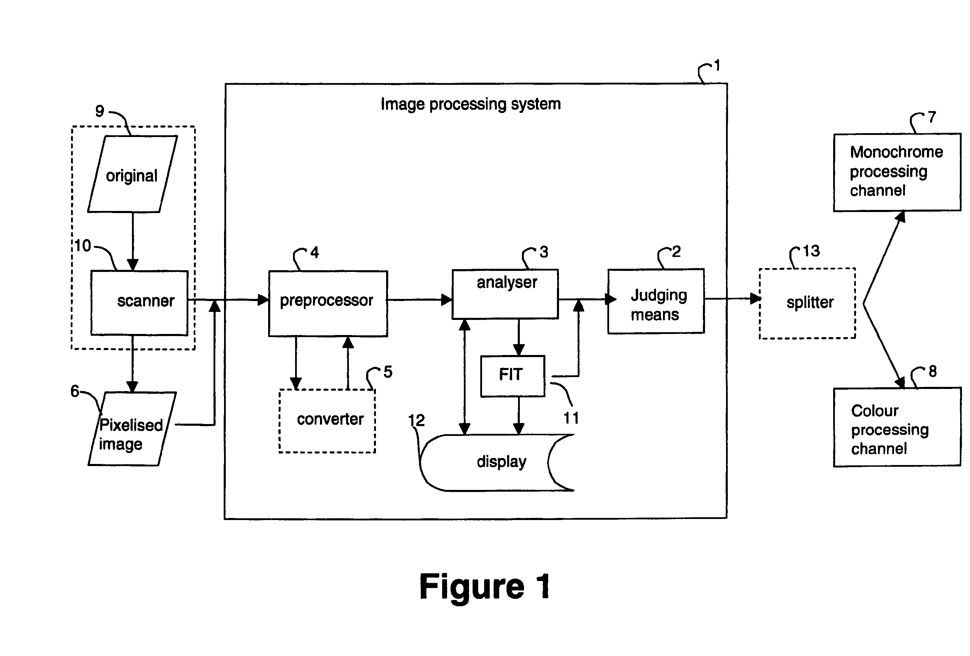

According to a preferred embodiment of the present invention, the image processing system (1), as schematically depicted in figure 1, comprises a pre-processor (4), an analyser (3), judging means (2) and optionally a converter (5). The image processing system may be incorporated in a computer, which may be coupled by a network or any other interface to one or more image reproduction systems. The image processing system may also be part of an image reproduction system. Examples of image reproduction systems are display systems, scanning systems, image recording systems and printing and/or copying systems. Any pixelised image (6) may be offered to the pre-processor of the image processing system. However, as indicated in fig.1, the pixelised image (6) may be generated by scanning an original (9) using a colour scanner (10). The size of the pixels depends on the optical resolution of the illumination device. The generated pixelised images are composed of a number of colour separation images dependent on the colour space used, in case of scanned images typically the sRGB colour space is used. Therefore, these generated pixelised images are composed of three separation images respectively of the process colours red (R), green (G) and blue (B). The image signals associated with the separation images typically specify for each pixel an image density value using a 24-bit representation, i.e. 8-bits per process colour. A 8-bit representation enables to define 256 levels per process colour each corresponding with a particular tonal value. Optionally a converter (5) may convert the image signals of the sRGB colour space associated with the pixelised image to image signals of a different colour space. Of particular interest are the device independent colour spaces of the CIE ("Commission Internationale d'Eclairage"), such as e.g. the XYZ colour space, the xyY colour space, the L*a*b* colour space and the L*u*v* colour space. Thereafter the pre-processor enables to pre-process the image signals, e.g. to correct colour errors, and determines the grey axis. The analyser (3) calculates for each pixel of the pixelised image the shortest distance to the grey axis and keeps track of the cumulative pixel count being the number of pixels associated with a particular distance to the grey axis, namely all the pixels having a shortest distance value to the grey axis of at least said particular distance. For all pixels, the logarithm of the cumulative pixel count is plotted versus the distance to the grey axis on a display (12) for further analysis. When the pixelised image represents a monochrome image a linear relationship between the logarithm of the cumulative pixel count and the distance to the grey axis is expected irrespective of the colour space used. The analysis of the plot can be facilitated by employing a fitting routine (11). The fitting routine analyses the pixels using a linear regression analysis. The obtained regression line can be displayed together with the pixel data using display (12). Based on the analysis data and optionally on the values of the regression parameters, the judging means (2) decide whether the pixelised image (or part thereof) is a monochrome image or a colour image. The judging means may mark the pixelised image accordingly for further processing in either a monochrome processing channel (7) or a colour processing channel (8). Optionally, a converter may be provided (not shown) to convert the image signals associated with the pixelised image. For instance, in case the pixelised image is judged to be colour, the associated image signals may be converted to another colour space, e.g. a colour space associated with the process colours of the colour processing channel, while in case the pixelised image is judged to be monochrome, the associated image signals may be converted into a monochrome image signal. An example of a colour processing channel is a colour image reproduction system. An example of a monochrome processing channel is a monochrome image reproduction system, including a colour image reproduction system capable of operating in a monochrome mode. The dual processing channel configuration according to the present invention may also be applied for the archiving of the pixelised images where in the respective processing channels different compression techniques are employed to process and store pixelised images or parts thereof. Optionally, when the pixelised image is a mixed colour/ monochrome image, one may opt to split the image using a splitter (13) in a monochrome part and a colour part. The monochrome part comprises all the image parts being judged as monochrome and/or marked to be further processed in a monochrome processing channel. The colour part comprises all the image parts being judged as colour and/or marked to be further processed in a colour processing channel.

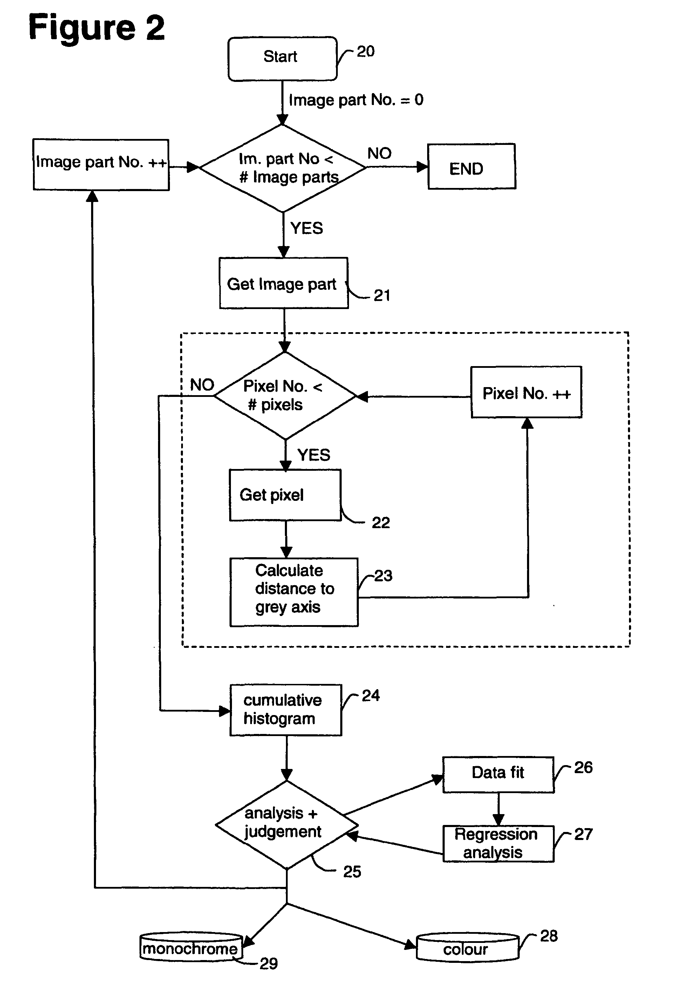

When operating an image processing system according to the present invention, a process flow as schematically depicted in fig.2 may be executed. At start (20) at least the first image part (21) of a pixelised image is retrieved by the pre-processor of the image processing system. The pre-processor determines the colour space associated with the part of the pixelised image. Optionally, the image signals associated with the pixelised image may be converted to another colour space, preferably a device-independent colour space of the CIE. Once the colour space is established, the grey axis is determined. The grey axis is defined as the straight line connecting the white point with the black point. The ideal black point and the ideal white point may be taken. For example in a RGB colour space, using a 24-bit representation, the ideal black point is referred to as (0,0,0), while the ideal white point is (255, 255, 255). In the CIE L*a*b* colour space, the ideal grey axis coincides with the luminance (lightness) axis, i.e. the achromatic colours or in other words a*=0 and b*=0. The ideal black point in L*a*b* is referred to as (0,0,0), while the ideal white point is referred to as (100,0,0) using a lightness scale from 0 to 100. In practice however, in order to compensate for colour errors and/or background colour, the black point and/or white point may be determined otherwise. For instance, the cluster with the darkest pixels (lack of lightness) and lowest chromaticity of the pixelised image may be taken into account to determine the black point, while the lightest pixels may be taken into account to determine the white point. Once the equation of the grey axis is established, the image data of each individual pixel (22) of the pixelised image is retrieved and for each pixel the shortest distance to the grey axis is calculated (23). Thereafter, a cumulative histogram (24) is formed wherein, for all pixels, the logarithm of the cumulative pixel count is plotted versus the distance to the grey axis. Plotting the logarithm of the cumulative pixel count attributes significant weight to a small number of pixels at a large distance from the grey axis or in other words pixels with a high chromaticity. This renders the system of the present invention highly sensitive such that small amounts of colour can be recognised. Subsequently the cumulative histogram is analysed and based thereon a judgement (25) is made whether the processed image part is monochrome or colour. Thereafter the next image part, if any, may be retrieved and the whole process flow can be repeated. The data analysis (25) can be supplemented and the subsequent judgement may be facilitated by fitting the data (26). Preferably the data are fitted employing a linear regression method. A regression analysis (27) is performed by selecting at least one regression parameter and comparing it with a predetermined value in order to perform the colour (28) /monochrome (29) judgement. Examples of regression parameters which may be useful in the analysis are the correlation coefficient (R), the coefficient of determination (R²), the slope of the regression line and the intercept of the regression line. When performing the colour/monochrome judgement according to the present invention, a colour threshold can be taken into account. For instance, suppose an image comprising a colour object which is 0.01 % or less of the image or image part is not to be considered as a colour image. According to the present invention a cut-off value for the cumulative pixel count can be defined in the cumulative histogram such that 99.99% percent of the pixels are taken into account in the analysis (25) and data fit, while the 0.01% of the pixels having the highest chromaticity values are excluded.

### Example 1

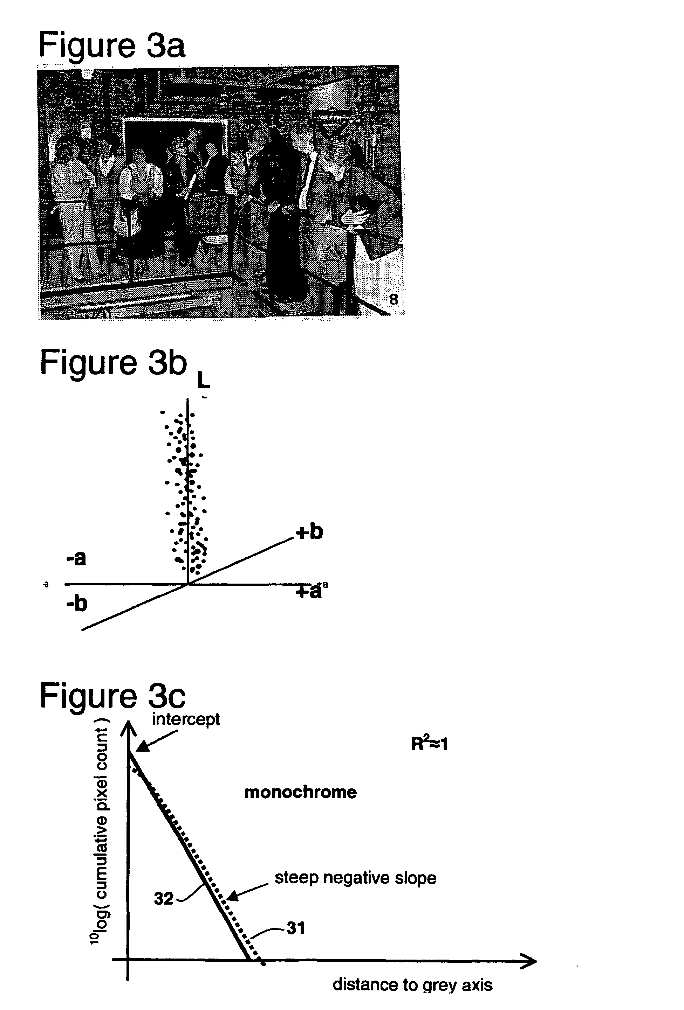

An original, in casu a monochrome photograph, as depicted in fig.3a, is scanned using a colour scanner. As a result a pixelised image is obtained which is used as input for the pre-processor of the image processing system according to the present invention. The pixelised image is composed of colour separation images in the RGB colour space. The image signals associated with the respective separation images are converted to image signals associated with the CIE L*a*b* colour space. An advantage of the CIE L*a*b* colour space is that colour is represented as perceived by the human eye. In fig.3b all pixels of fig.3a are represented in the CIE L*a*b* colour space. To determine the grey axis the ideal black point (0,0,0) and the ideal white point (100,0,0) is taken or in other words the grey axis coincides with the luminance axis. Subsequently the analyser can calculate for each pixel the shortest distance to the grey axis. For all pixels, the logarithm of the cumulative pixel count (31) is subsequently plotted versus the distance to the grey axis in the cumulative histogram as depicted in fig.3c. As can be seen in this cumulative histogram, the relationship depicted by the curve (31) is a linear one, as expected for a monochrome image. This is confirmed by the linear regression analysis yielding a regression curve (32) with a coefficient of determination (R²) equal to 0.996 (R²=1 means a perfect straight line). As can be expected, the slope of the regression line is very steep while the value of the intercept is high. These are all indications towards a monochrome pixelised image. The operator or may perform the colour/monochrome judgement himself and process pixelised image accordingly. Alternately, threshold values for one or more regression parameters may be used to compare with the obtained regression parameter values such that the monochrome/colour judgement can be made in an automated way by the image processing system. Once the judgement is made one could opt to process the pixelised image such that a single separation image of the black process colour remains, or in other words a conversion to a true monochrome image could be executed. Doing so reduces the size of the pixelised image which is both beneficial with respect to storage capacity as well as processing time in subsequent processing steps. Moreover, the removal of colour errors is likely to enhance image quality.

### Example 2

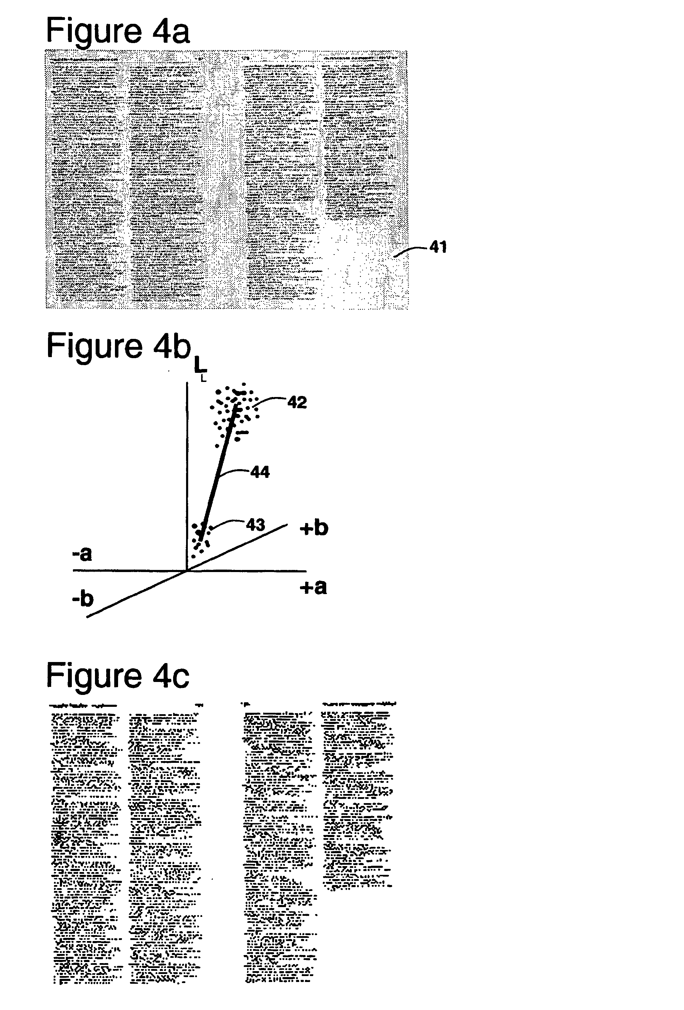

An original, in casu a black and white text document on a paper background as depicted in fig.4a, is scanned using a colour scanner. Originally the paper background was white, but the influence of the sunlight resulted in a yellowed paper background (41) As a result of the colour scan, a pixelised image is obtained which is used as input for the pre-processor of the image processing system according to the present invention. The pixelised image is composed of colour separation images in the RGB colour space. The image signals associated with the respective separation images are converted to image signals associated with the CIE L*a*b* colour space. In fig.4b all pixels of fig.4a are represented in the CIE L*a*b* colour space. As can be observed, there are two clusters of pixels: a white-yellow cluster (42) composed of the background pixels and a black cluster (43) composed of the text characters. The grey axis (44) is determined by the pre-processor as the straight line connecting the black point and the white point and is clearly different from the ideal grey axis. The white point is obtained by averaging the pixels of the white-yellow cluster (42), while the black point is obtained by averaging the pixels of the black cluster. Subsequently the analyser can calculate for each pixel the shortest distance to the grey axis (44). For all pixels, the logarithm of the cumulative pixel count can subsequently be plotted versus the distance to the grey axis in a cumulative histogram. Although not shown, the result is comparable with the histogram obtained in example 1 as depicted in fig.3c. The judgement is therefore again monochrome. Once this judgement is made one could opt to process the pixelised image such that the grey axis coincides with the ideal grey axis (i.e. the luminance axis) by subjecting the pixels to at least a rotation and translation step. The result hereof is depicted in fig. 4c. One could even opt to include a monochrome / black-and-white judgement once it is established that the pixelised image is not a colour image. Once it is established that the image is a true black-and-white image, i.e. without grey levels, one could opt to process the pixelised image such that a conversion to a true black-and-white image is executed. Doing so even further reduces the size of the pixelised image as only a single bit per pixel is required instead of 8-bits in case of a monochrome or 24-bits in case of a colour image.

### Example 3

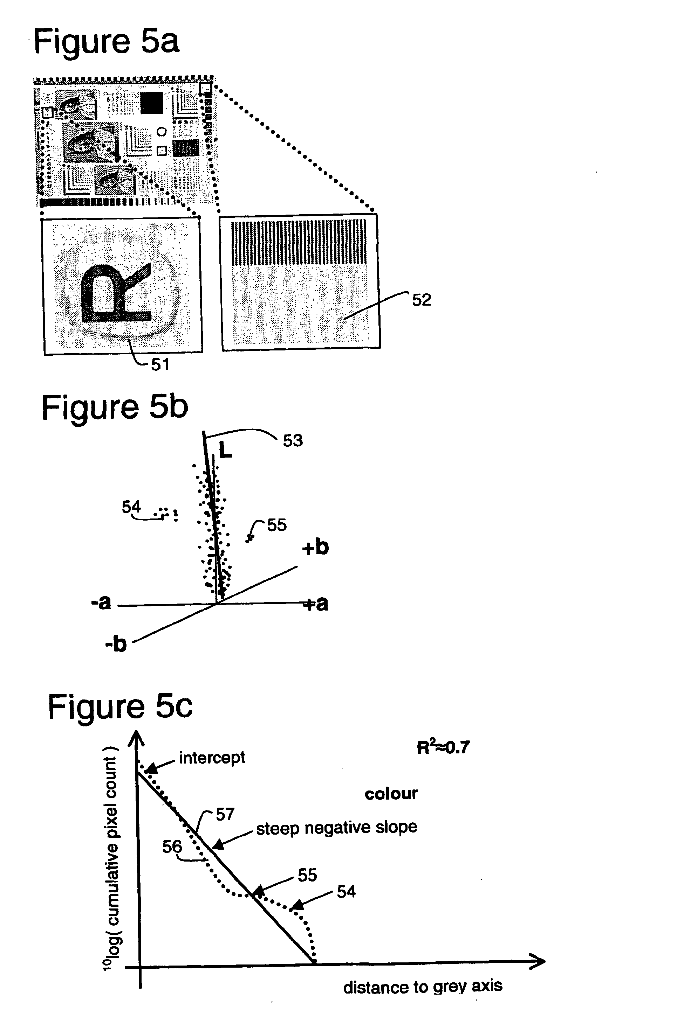

An original, in casu a monochrome document with a very small amount of colour, as depicted in fig.5a, is scanned using a colour scanner. The document includes two small colour objects: a green circle (51) to highlight a character and some brown coffee spots (52) formed by spilling coffee on the document. As a result of the colour scan, a pixelised image is obtained which is used as input for the pre-processor of the image processing system according to the present invention. The pixelised image is composed of colour separation images in the RGB colour space. The image signals associated with the respective separation images are converted to image signals associated with the CIE L*a*b* colour space. In fig.5b all pixels of fig.5a are represented in the CIE L*a*b* colour space. As can be observed, there are two small clusters of colour pixels: a cluster (54) composed of the pixels of the green colour object (51) and a cluster (55) composed of the pixels of the brown colour object (51). The pre-processor determines the equation of the grey axis (53) which almost coincides with the ideal grey axis. Subsequently the analyser calculates for each pixel the shortest distance to the grey axis. For all pixels, the logarithm of the cumulative pixel count (56) is plotted versus the distance to the grey axis in the cumulative histogram as depicted in fig.5c. As can be seen in this cumulative histogram, the brown cluster (55) and the green cluster (54) are clearly visualised demonstrating the sensitivity of the image processing system according to the present invention to detect small amounts of colour. The image is therefore judged to be colour. This is confirmed by the linear regression analysis yielding a regression curve (57) with a coefficient of determination (R²) equal to about 0.7, the slope of the regression line is still steep while the value of the intercept is lowered. Particularly, a threshold value for the coefficient of determination (R²) may be used to compare with the obtained value such that the monochrome/colour judgement is made in an automated way by the image processing system.
In this example it is questionable whether one wishes to treat the coloured objects as colour or not in further processing steps. Therefore after the colour recognition one could further process the data in order to determine whether the colour in the image is functional or not. This can be done by the user/operator or in an automated way using a rule base. Such a system is disclosed in co-pending EP patent application 02077078.0 (filing date May 27, 2002).

### Example 4

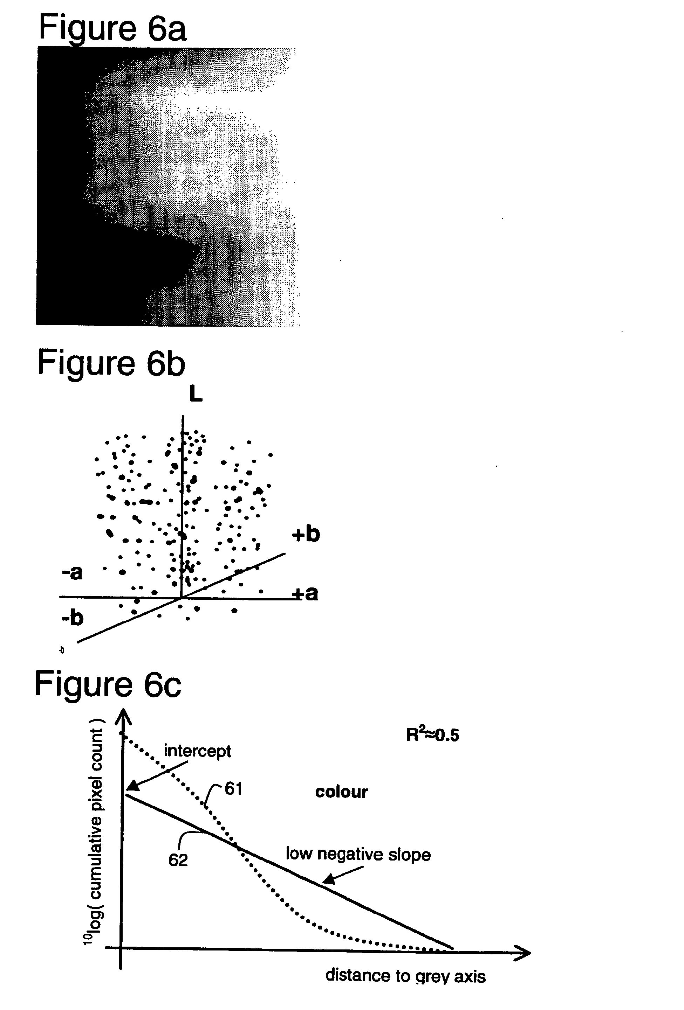

An original, in casu a colour picture, which is depicted in fig.5a as a monochrome picture, is scanned using a colour scanner. The document includes all kind of colours distributed over the entire colour space. As a result of the colour scan, a pixelised image is obtained which is used as input for the pre-processor of the image processing system according to the present invention. The pixelised image is composed of colour separation images in the RGB colour space. The image signals associated with the respective separation images are converted to image signals associated with the CIE L*a*b* colour space. In fig.6b all pixels of fig.6a are represented in the CIE L*a*b* colour space. As can be observed, there the pre-processor determines the equation of the grey axis which almost coincides with the ideal grey axis. Subsequently the analyser calculates for each pixel the shortest distance to the grey axis. For all pixels, the logarithm of the cumulative pixel count (61) is plotted versus the distance to the grey axis in the cumulative histogram as depicted in fig.6c. As can be seen in this cumulative histogram, there is no linear relation between the logarithm of the cumulative pixel count and the distance to the grey axis. The image is therefore judged to be colour. This is confirmed by the linear regression analysis yielding a regression curve (62) with a coefficient of determination (R²) equal to about 0.5, the slope of the regression line is low and the value of the intercept is also low. These are all indications towards a colour pixelised image. The operator may perform the colour/monochrome judgement himself and process pixelised image accordingly. Alternately, threshold values for one or more regression parameters may be used to compare with the obtained regression parameter values such that the monochrome/colour judgement can be made in an automated way by the image processing system.

## Claims

1. An image processing method for processing a pixelised image comprising the steps of:
analysing the pixel data representative for said pixelised image in a colour space and based thereon determining the grey axis, being defined as the straight line connecting the white point with the black point;
determining for each pixel of said pixelised image the shortest distance to said grey axis;
forming a cumulative histogram by plotting for the pixels of said pixelised image the value of said shortest distance versus the cumulative pixel count, being the number of associated pixels having at least said value of said shortest distance; and
analysing the relationship between the pixels in said cumulative histogram and based thereon judging whether said pixelised image is to be processed as a monochrome image or a colour image.

2. The method as recited in claim 1, wherein, when analysing the relationship between the pixels in said cumulative histogram, only the pixels of said cumulative histogram having an associated cumulative pixel count value equal to or greater than a predetermined threshold are taken into account.

3. The method as recited in claim 1 and 2, wherein the relationship between the pixels in said cumulative histogram is determined by applying a linear regression analysis to said pixels in said cumulative histogram.

4. The method as recited in claim 3, wherein said judging whether said pixelised image is to be processed as a monochrome image or a colour image is based on comparing the value of at least one regression parameter with a predetermined threshold value of said at least one regression parameter.

5. The method as recited in claim 4, wherein said at least one regression parameter is selected from a group of parameters comprising the correlation coefficient (R), the coefficient of determination (R²), the slope of the regression line and the intercept of the regression line.

6. The method as recited in any preceding claim, further comprising the step of converting said pixel data representative for said pixelised image in said colour space to pixel data representative for said pixelised image in a CIE colour space.

7. An image processing system for processing a pixelised image comprising:
a pre-processor for analysing the pixel data representative for said pixelised image in a colour space and based thereon determining the grey axis, being defined as the straight line connecting the white point with the black point, and determining for each pixel of said pixelised image the shortest distance to said grey axis;
an analyser for analysing the relationship between the pixels in a cumulative histogram, said cumulative histogram being formed by plotting for the pixels of said pixelised image the value of said shortest distance versus the cumulative pixel count, being the number of associated pixels having at least said value of said shortest distance, and
judging means for judging, based on said relationship between the pixels in said cumulative histogram, whether said pixelised image is to be processed as a monochrome image or a colour image.

8. The system as recited in claim 7, further comprising a fitting unit wherein the relationship between the pixels in said cumulative histogram is determined by applying a linear regression analysis to said pixels in said cumulative histogram.

9. The system as recited in claim 7, further comprising a converter converting said pixel data representative for said pixelised image in said colour space to pixel data representative for said pixelised image in a CIE colour space.

## Patentansprüche

1. Bildverarbeitungsverfahren zur Verarbeitung eines Pixelbildes, mit den folgenden Schritten:
Analysieren der Pixeldaten, die für das Pixelbild repräsentativ sind, in einem Farbraum und, auf dieser Grundlage, Bestimmen der Grau-Achse;
Bestimmen des kürzesten Abstands zu dieser Grau-Achse für jedes Pixel des Pixelbildes;
Erzeugen eines kumulativen Histogramms durch Auftragen, für die Pixel des Pixelbildes, des Wertes des kürzesten Abstands gegen den kumulativen Pixelzählwert, d.h., die Anzahl der zugehörigen Pixel, die wenigstens diesen Wert als kürzesten Abstand haben; und
Analysieren der Beziehung zwischen den Pixeln in dem kumulativen Histogramm und, auf dieser Grundlage, Entscheiden, ob das Pixelbild als ein Monochrombild oder ein Farbbild zu verarbeiten ist.

2. Verfahren nach Anspruch 1, bei dem bei der Analyse der Beziehung zwischen den Pixeln in dem kumulativen Histogramm nur diejenigen Pixel des kumulativen Histogramms in Betracht gezogen werden, für die der zugehörige kumulative Pixelzählwert größer oder gleich einem vorbestimmten Schwellenwert ist.

3. Verfahren nach Anspruch 1 oder 2, bei dem die Beziehung zwischen den Pixeln in dem kumulativen Histogramm durch Anwendung einer linearen Regressionsanalyse auf die Pixel in dem kumulativen Histogramm bestimmt wird.

4. Verfahren nach Anspruch 3, bei dem die Bewertung, ob das Pixelbild als ein monochromes Bild oder als ein Farbbild zu verarbeiten ist, auf dem Vergleich des Wertes wenigstens eines Regressionsparameters mit einem vorgegebenen Schwellenwert für diesen wenigstens einen Regressionsparameter basiert.

5. Verfahren nach Anspruch 4, bei dem der wenigstens eine Regressionsparameter ausgewählt ist aus einer Gruppe von Parametern bestehend aus dem Korrelationskoeffizienten (R), dem Bestimmungskoeffizienten (R²), der Steigung der Regressionslinie und dem Schnittpunkt der Regressionslinie.

6. Verfahren nach einem der vorstehenden Ansprüche, mit dem weiteren Schritt der Umwandlung der Pixeldaten, die für das Pixelbild in dem genannten Farbraum repräsentativ sind, in Pixeldaten, die für das Pixelbild in einem CIE Farbraum repräsentativ sind.

7. Bildverarbeitungssystem zur Verarbeitung eines Pixelbildes, mit:
einem Vorprozessor zur Analyse der Pixeldaten, die für das Pixelbild in einem Farbraum repräsentativ sind, und, auf dieser Grundlage, zur Bestimmung der Grau-Achse, die definiert ist als die gerade Linie, die den Weiß-Punkt mit dem Schwarz-Punkt verbindet, und zur Bestimmung des kürzesten Abstands zu dieser Grau-Achse für jedes Pixel des Pixelbildes;
einem Analysator zur Analyse der Beziehung zwischen den Pixeln in einem kumulativen Histogramm, das gebildet wird, indem für die Pixel des Pixelbildes der Wert des kürzesten Abstands gegen den kumulativen Pixelzählwert aufgetragen wird, wobei dieser die Anzahl von zugehörigen Pixeln ist, die wenigstens diesen Wert für den kürzesten Abstand haben, und
einer Bewertungseinrichtung zur Bewertung, auf der Grundlage der Beziehung zwischen den Pixeln in dem kumulativen Histogramm, ob das zu verarbeitende Pixelbild ein Monochrombild oder ein Farbbild ist.

8. System nach Anspruch 7, mit einer Anpassungseinheit, in der die Beziehung zwischen den Pixeln in dem kumulativen Histogramm durch Anwendung einer linearen Regressionsanalyse auf die Pixel in dem kumulativen Histogramm bestimmt wird.

9. System nach Anspruch 7, mit einem Konverter zum Umwandeln der Pixeldaten, die für das Pixelbild in dem genannten Farbraum repräsentativ sind, in Pixeldaten, die für das Pixelbild in einem CIE Farbraum repräsentativ sind.

## Revendications

1. Procédé de traitement d'images pour traiter une image pixellisée comprenant les étapes suivantes :
analyser les données de pixels représentatives de ladite image pixellisée dans un espace coloré et en se basant sur celles-ci, déterminer l'axe des gris, qui est défini comme étant la ligne droite reliant le point blanc et le point noir ;
déterminer pour chaque pixel de ladite image pixellisée la distance la plus courte par rapport audit axe des gris ;
former un histogramme cumulatif en traçant, pour les pixels de ladite image pixellisée, la valeur de ladite distance la plus courte en fonction du compte cumulatif de pixels, qui est le nombre de pixels associés ayant au moins ladite valeur de ladite distance la plus courte ; et
analyser la relation entre les pixels dans ledit histogramme cumulatif et en se basant sur celle-ci, évaluer si ladite image pixellisée doit être traitée en tant qu'image monochrome ou en tant qu'image couleur.

2. Procédé selon la revendication 1, dans lequel, lorsque l'on analyse la relation entre les pixels dans ledit histogramme cumulatif, seuls les pixels dudit histogramme cumulatif ayant une valeur de compte cumulatif de pixels égale ou supérieure à un seuil prédéterminé sont pris en compte.

3. Procédé selon les revendications 1 et 2, dans lequel la relation entre les pixels dans ledit histogramme cumulatif est déterminée en appliquant une analyse par régression linéaire auxdits pixels dans ledit histogramme cumulatif.

4. Procédé selon la revendication 3, dans lequel ladite évaluation permettant de savoir si ladite image pixellisée doit être traitée en tant qu'image monochrome ou en tant qu'image couleur est basée sur la comparaison de la valeur d'au moins un paramètre de régression avec une valeur seuil prédéterminée dudit au moins un paramètre de régression.

5. Procédé selon la revendication 4, dans lequel ledit au moins un paramètre de régression est sélectionné parmi un groupe de paramètres comprenant le coefficient de corrélation (R), le coefficient de détermination (R²), la pente de la droite de régression et le point d'intersection de la droite de régression.

6. Procédé selon l'une quelconque des revendications précédentes, comprenant en outre l'étape de conversion desdites données de pixels représentatives de ladite image pixellisée dans ledit espace coloré en données de pixels représentatives de ladite image pixellisée dans un espace coloré CIE.

7. Système de traitement d'images pour traiter une image pixellisée comprenant :
un préprocesseur pour analyser les données de pixels représentatives de ladite image pixellisée dans un espace coloré et en se basant sur celles-ci, déterminer l'axe des gris, qui est défini comme étant la ligne droite reliant le point blanc et le point noir et déterminer pour chaque pixel de ladite image pixellisée la distance la plus courte par rapport audit axe des gris ;
un analyseur pour analyser la relation entre les pixels dans un histogramme cumulatif, ledit histogramme cumulatif étant formé en traçant, pour les pixels de ladite image pixellisée, la valeur de la distance la plus courte en fonction du compte de pixels cumulatif, qui est le nombre de pixels associés ayant au moins ladite valeur de ladite distance la plus courte, et
des moyens d'évaluation pour évaluer, en se basant sur ladite relation entre les pixels dans ledit histogramme cumulatif, si ladite image pixellisée doit être traitée comme une image monochrome ou comme une image couleur.

8. Système selon la revendication 7, comprenant en outre une unité d'ajustement dans laquelle la relation entre les pixels dans ledit histogramme cumulatif est déterminée en appliquant une analyse par régression linéaire auxdits pixels dans ledit histogramme cumulatif.

9. Système selon la revendication 7, comprenant en outre un convertisseur convertissant lesdites données de pixels représentatives de ladite image pixellisée dans ledit espace coloré en données de pixels représentatives de ladite image pixellisée dans un espace coloré CIE.
